# EUROPÄISCHE PATENTSCHRIFT

(11) **EP 4 052 367 B1**
(45) Veröffentlichungstag und Bekanntmachung des Hinweises auf die Patenterteilung: **17.09.2025**
(21) Anmeldenummer: 20781346.0
(22) Anmeldetag: 25.09.2020
(51) Int. Cl.: H02P 6/185, H02P 6/30, H02P 21/06

(54) **VERFAHREN UND VORRICHTUNG ZUM KALIBRIEREN EINER ANSTEUERUNG EINER ELEKTRISCHEN MASCHINE**
METHOD AND DEVICE FOR CALIBRATING THE CONTROL OF AN ELECTRIC MACHINE
PROCÉDÉ ET DISPOSITIF D'ÉTALONNAGE DE LA COMMANDE D'UNE MACHINE ÉLECTRIQUE

(30) Priorität: 31.10.2019 DE 102019216831
(43) Veröffentlichungstag der Anmeldung: 07.09.2022
(73) Patentinhaber: Robert Bosch GmbH, 70442 Stuttgart (DE)
(72) Erfinder: GOETTING, Gunther, 70499 Stuttgart (DE); CHEN, Lei, 70437 Stuttgart (DE)
(86) Internationale Anmeldenummer: PCT/EP2020/076922
(87) Internationale Veröffentlichungsnummer: WO 2021/083590

(56) Entgegenhaltungen:
- EP-A1- 3 288 179
- DE-A1- 10 311 028
- DE-A1- 102005 045 835
- DE-A1- 102012 205 540
- DE-A1- 102014 212 383
- DE-B3- 102014 209 603
- US-A1- 2005 127 857

## Beschreibung

Die vorliegende Erfindung betrifft ein Verfahren zum Kalibrieren einer Ansteuerung einer elektrischen Maschine und eine Vorrichtung zum Kalibrieren einer Ansteuerung einer elektrischen Maschine.

### Stand der Technik

Elektrische Antriebssysteme finden vielfältige Anwendung, sei es im Haushaltsbereich, bei Fahrzeugen oder in der Industrie.

Antriebssysteme umfassen elektrische Maschinen, welche von einem Controller gesteuert werden. Bei der feldorientierten Regelung wird die Regelung des Drehmoments von der Regelung des Flusses entkoppelt. Dadurch kann eine gute Drehzahl- und Positioniergenauigkeit erreicht werden. Vorteilhafterweise betrachtet man hierzu ein d-q-Koordinatensystem, welches sich mit dem Rotor der elektrischen Maschine mitbewegt.

Die d- und q-Achsen verlaufen zueinander senkrecht. Der q-Wert entspricht dem Drehmoment der elektrischen Maschine und der d-Wert entspricht der magnetischen Flussdichte. Die q- und d-Werte können von dem Controller wie bei einer Gleichstrommaschine mit einem PI-Regler gesteuert werden. Insbesondere kann das Drehmoment der elektrischen Maschine durch einen vorgegebenen q-Referenzwert beeinflusst werden.

Eine genaue Ansteuerung der elektrischen Maschinen erfordert eine genaue Kenntnis des Rotorwinkels zu jedem Zeitpunkt. Zur Bestimmung des Rotorwinkels können Winkelgeber an der Rotorwelle angeordnet sein, welche Winkel messen.

Weiter sind geberlose Antriebssysteme bekannt, welche auf einen Winkelgeber verzichten. Dadurch können die Systemkosten reduziert werden und die Robustheit und der Raumbedarf verbessert werden.

Um in derartigen geberlosen Antriebssystemen die Rotorlage zu bestimmen, kann eine Anisotropie der elektrischen Maschine bestimmt werden. Beispielweise kann die Lage- und Winkelabhängigkeit der elektrischen Maschine mittels einer hochfrequenten Anregung bestimmt werden. Aus der DE 10 2015/217986 A1 ist ein beispielhaftes Verfahren zur Identifikation der magnetischen Anisotropie einer elektrischen Drehfeldmaschine bekannt. Weitere Verfahren und Vorrichtungen dazu sind aus den Druckschriften EP 3 288 179 Al, DE 10 2014 209603 B3, DE 103 11 028 Al, DE 10 2012 205540 Al, DE 10 2005 045835 Al, US 2005/127857 Al und DE 10 2014 212383 Al bekannt.

Beim Betrieb der elektrischen Maschine können technische Defekte auftreten, etwa die Bestimmung eines falschen Rotor-Offsetwinkels, eine falsche Phasenreihenfolge und Ähnliches. Dies kann zur dazu führen, dass die tatsächliche Drehrichtung der elektrischen Maschine nicht richtig bestimmt wird. Dadurch kann es bei der Ansteuerung zu einer ungewollten Drehrichtung der elektrischen Maschine und in der Folge etwa zu einer falschen Bewegrichtung eines durch die elektrische Maschine angesteuerten Fahrzeugs kommen. Um derartige sicherheitsrelevante Fehlfunktionen zu vermeiden, ist es erforderlich, die Drehrichtung der elektrischen Maschine sicher zu bestimmen.

Es besteht daher ein Bedarf an Verfahren zur genauen Kalibrierung einer Ansteuerung einer elektrischen Maschine.

### Offenbarung der Erfindung

Die Erfindung stellt ein Verfahren zum Kalibrieren einer Ansteuerung einer elektrischen Maschine mit den Merkmalen des Patentanspruchs 1 und eine Vorrichtung zum Kalibrieren einer Ansteuerung einer elektrischen Maschine mit den Merkmalen des Patentanspruchs 8 bereit.

Bevorzugte Ausführungsformen sind Gegenstand der jeweiligen Unteransprüche.

### Vorteile der Erfindung

Die Erfindung ermöglicht es, durch das Anlegen des elektrischen Testsignals eine Drehrichtung der elektrischen Maschine sicher zu bestimmen. Hierzu wird das elektrische Testsignal mit einer vorgegebenen Richtung in dem d-q-Koordinatensystem angelegt. Die genaue Richtung selbst muss anfänglich noch nicht bekannt sein. Vielmehr ist es ausreichend, dass das Testsignal eine feste Richtung in dem mit dem Rotor mitrotierenden d-q-Koordinatensystem aufweist. Gemäß einer Ausführungsform kann die Lage der Achsen des d-q-Koordinatensystems bekannt sein, die genaue Ausrichtung jedoch noch nicht. Insbesondere kann noch nicht bekannt sein, in welche Richtung die q-Achse ausgerichtet ist. Wird nun beispielsweise ein Testsignal mit einer vorgegebenen Richtung entlang der q-Achse angelegt, kann anhand der gemessenen Änderung des Rotorwinkels die Drehrichtung bestimmt werden. Ändert sich der Rotorwinkels in positiver Richtung, kann beispielweise ermittelt werden, dass das Testsignal in positiver Richtung entlang der q-Achse angelegt wurde.

Die Erfindung ermöglicht es damit, die Orientierung des d-q-Koordinatensystems zu ermitteln. Die Ansteuerung der elektrischen Maschine kann dadurch kalibriert werden. Darunter kann zu verstehen sein, dass die Ansteuersignale, mit welchen die elektrische Maschine von dem Controller gesteuert wird, unter Berücksichtigung der ermittelten Orientierung des d-q-Koordinatensystems berechnet und an die elektrische Maschine angelegt werden.

Gemäß einer Ausführungsform des Verfahrens zum Kalibrieren einer Ansteuerung einer elektrischen Maschine kann eine Hypothese bezüglich einer Orientierung des d-q-Koordinatensystems plausibilisiert werden. So soll angenommen werden, dass eine bestimmte Richtung einer positiven q-Richtung in dem d-q-Koordinatensystem entspricht. Wird beim Anlegen eines elektrischen Testsignals entlang der positiven q-Achse auch eine entsprechende Änderung des Rotorwinkels in positiver Richtung gemessen, so wird die Hypothese bestätigt. Wird jedoch beim Anliegen des elektrischen Testsignals entlang der positiven q-Achse eine Änderung des Rotorwinkels in negativer Richtung gemessen, so wird die Hypothese widerlegt. Stattdessen wird erkannt, dass die bestimmte Richtung der negativen q-Richtung in dem d-q-Koordinatensystem entspricht.

Die Erfindung ermöglicht es somit, eine falsche Drehrichtung einer elektrischen Maschine zu verhindern.

Gemäß einer Ausführungsform des Verfahrens zum Kalibrieren einer Ansteuerung einer elektrischen Maschine wird vor dem Anlegen des elektrischen Testsignals ein Offsetwinkel des Rotors der elektrischen Maschine bestimmt. Es wird somit ermittelt, ob der Softwarewinkel, d.h. der in der Steuerung durch den Controller verwendete Winkel dem tatsächlichen Rotorlagewinkel entspricht.

Gemäß einer Ausführungsform des Verfahrens zum Kalibrieren einer Ansteuerung einer elektrischen Maschine erfolgt das Bestimmen des Offsetwinkels des Rotors der elektrischen Maschine anhand einer Messung einer Anisotropie der elektrischen Maschine. Das Bestimmen bzw. Kalibrieren des Offsetwinkels des Rotors der elektrischen Maschine kann im Rahmen einer bestimmten Messgenauigkeit bestimmt werden. Etwa kann die Richtung der Flussachse mit einer Genauigkeit von +/- 20° bestimmt werden. Nach dem Bestimmen des Offsetwinkels kann jedoch noch eine verbleibende 180° Unsicherheit bestehen. Mit anderen Worten ist die Richtung des Flusses entlang der Flussachse noch unbekannt. Ob es sich um eine positive oder negative Richtung handelt, wird anhand des Verfahrens zum Kalibrieren der Ansteuerung der elektrischen Maschine bestimmt.

Gemäß einer Ausführungsform des Verfahrens zum Kalibrieren einer Ansteuerung einer elektrischen Maschine wird eine Vielzahl von elektrischen Testsignalen an die elektrische Maschine angelegt, wobei sich die vorgegebenen Richtungen der Testsignale in dem d-q-Koordinatensystem voneinander unterscheiden. Falls die Bestimmung der Ausrichtung des d-q-Koordinatensystems anhand eines einzelnen Testsignals nicht eindeutig ist, kann durch Verwendung mehrerer weiterer elektrischer Testsignale eine eindeutige Ausrichtung ermittelt werden.

Gemäß einer Ausführungsform des Verfahrens zum Kalibrieren einer Ansteuerung einer elektrischen Maschine umfasst das Anlegen des mindestens einen elektrischen Testsignals mit einer vorgegebenen Richtung in einem d-q-Koordinatensystem an die elektrische Maschine das Anlegen eines ersten Testsignals mit einer ersten vorgegebenen Richtung in dem d-q-Koordinatensystem an die elektrische Maschine. Falls das Anlegen des ersten Testsignals keine Änderung des Rotorwinkels des Rotors der elektrischen Maschine hervorruft, wird ein zweites Testsignal mit einer von der ersten vorgegebenen Richtung in dem d-q-Koordinatensystem abweichenden zweiten Richtung an die elektrische Maschine angelegt. Beispielsweise können Komponenten der elektrischen Maschine vorgespannt sein, sodass das Einprägen des ersten Testsignals keine signifikante Bewegung des Rotors bewirkt. Das zweite Testsignal kann eine stärkere Änderung des Rotorwinkels des Rotors der elektrischen Maschine hervorrufen, sodass die Orientierung des d-q-Koordinatensystems bestimmt werden kann.

Gemäß einer Ausführungsform des Verfahrens zum Kalibrieren einer Ansteuerung einer elektrischen Maschine ist die zweite Richtung der ersten Richtung in dem d-q-Koordinatensystem entgegengesetzt.

Gemäß einer Ausführungsform des Verfahrens zum Kalibrieren einer Ansteuerung einer elektrischen Maschine ist das elektrische Testsignal ein Spannungssignal oder ein Stromsignal. Das Signal kann eine beliebige Signalform aufweisen. Insbesondere kann das Signal treppenförmig, sinusförmig, pulsförmig oder dergleichen sein.

Gemäß einer Ausführungsform des Verfahrens zum Kalibrieren einer Ansteuerung einer elektrischen Maschine wird eine maximale Spannung oder eine maximale Stromstärke des elektrischen Testsignals sukzessive erhöht, bis eine Änderung des Rotorwinkels des Rotors der elektrischen Maschine messbar ist. Durch schrittweises Erhöhen kann eine zu große Auslenkung, d.h. eine zu starke Änderung des Rotorwinkels des Rotors der elektrischen Maschine verhindert werden. Insbesondere kann erreicht werden, dass ein Radwinkel des Kraftfahrzeugs, welches durch die elektrische Maschine betrieben wird, während der Anwendung des Verfahrens zum Kalibrieren der Ansteuerung der elektrischen Maschine unverändert bleibt. Aufgrund der Getriebeübersetzung und der begrenzten Steifigkeit des Antriebsstrangs führt die geringfügige Änderung des Rotorwinkels des Rotors der elektrischen Maschine nicht zu einer Bewegung des Fahrzeugs selbst.

Gemäß einer Ausführungsform des Verfahrens zum Kalibrieren einer Ansteuerung einer elektrischen Maschine befindet sich die elektrische Maschine beim Anlegen des elektrischen Testsignals im Stillstand.

### Kurze Beschreibung der Zeichnungen

Es zeigen:
- Figur 1: ein schematisches Blockdiagramm einer Vorrichtung zum Kalibrieren einer Ansteuerung einer elektrischen Maschine gemäß einer Ausführungsform der Erfindung; und
- Figur 2: ein schematisches Flussdiagramm eines Verfahrens zum Kalibrieren einer Ansteuerung einer elektrischen Maschine gemäß einer Ausführungsform der Erfindung.

Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

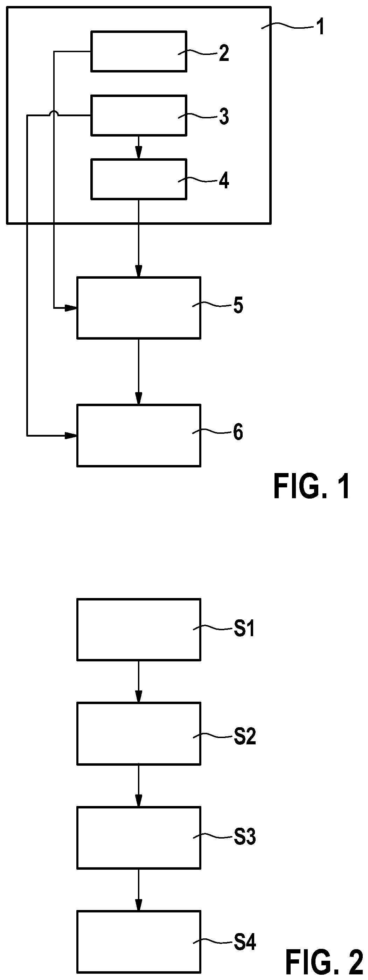

Figur 1 zeigt ein schematisches Blockdiagramm einer Vorrichtung 1 zum Kalibrieren einer Ansteuerung einer elektrischen Maschine 6.

Die Vorrichtung 1 umfasst einen Signalgenerator 2, eine Messeinrichtung 3 und eine Kalibriereinrichtung 4. Die elektrische Maschine 6 umfasst einen Rotor und einen Stator und wird von einem Controller 5 (Steuervorrichtung) gesteuert. Der Signalgenerator 2 erzeugt ein elektrisches Testsignal, welches von dem Controller 5 an die elektrische Maschine 6 angelegt wird.

Bei dem elektrischen Testsignal kann es sich um ein Spannungssignal oder ein Stromsignal handeln, welches eine vorgegebene Richtung in einem d-q-Koordinatensystem aufweist. Darunter ist zu verstehen, dass sich die Richtung in dem mit einem Rotor der elektrischen Maschine 6 mitrotierenden Koordinatensystem nicht ändert. Die Orientierung des d-q-Koordinatensystems muss jedoch noch nicht bekannt sein.

Es kann vorgesehen sein, dass das elektrische Testsignal nur dann an die elektrische Maschine 6 angelegt wird, wenn sich die elektrische Maschine im Stillstand befindet. Hierzu können Sensoren vorgesehen sein. Falls die elektrische Maschine ein Fahrzeug antreibt, kann etwa ermittelt werden, dass sich das Fahrzeug im Stillstand befindet.

Weiter kann vorgesehen sein, dass vor dem Anlegen des elektrischen Testsignals ein Offsetwinkel des Rotors der elektrischen Maschine 6 bestimmt wird. Das Bestimmen des Offsetwinkels des Rotors der elektrischen Maschine erfolgt vorzugsweise durch Messung einer Anisotropie der elektrischen Maschine. Die Messung der Anisotropie kann durch die Messeinrichtung 3 erfolgen.

Die Messeinrichtung 3 ist weiter ausgelegt, eine Änderung des Rotorwinkels des Rotors der elektrischen Maschine 6 in Abhängigkeit von dem angelegten elektrischen Testsignal zu messen. Insbesondere kann die Messeinrichtung 3 bestimmen, in welcher Richtung sich der Rotor der elektrischen Maschine 6 dreht. Die Messeinrichtung 3 gibt ein entsprechendes Messsignal aus.

Die Kalibriereinrichtung 4 wertet das Messsignal der Messeinrichtung 3 aus, um die Orientierung des d-q-Koordinatensystems zu ermitteln. Ist beispielweise die Lage der d- und q-Achsen aufgrund des Bestimmens des Offsetwinkels des Rotors bekannt, jedoch noch nicht die genaue Orientierung der d- und q-Achsen, so kann anhand der Drehrichtung des Rotors der elektrischen Maschine, welche durch das Anlegen des elektrischen Testsignals resultiert, die Orientierung der d- und q-Achsen ermittelt werden.

Beispielsweise kann der Signalgenerator 2 ein elektrisches Testsignal in einer ersten Richtung entlang einer q-Achse anlegen. Ändert sich der Rotorwinkels des Rotors in positiver Richtung, so kann erkannt werden, dass es sich bei der ersten Richtung um eine positive Richtung der q-Achse handelt.

Die Kalibriereinrichtung 4 kalibriert den Controller 5, d.h. übermittelt die Orientierung des d-q-Koordinatensystems an den Controller 5. Der Controller 5 führt die weitere Ansteuerung der elektrischen Maschine 6 unter Berücksichtigung der übertragenen Orientierung des d-q-Koordinatensystems durch.

Falls die Messeinrichtung 3 keine oder nur eine insignifikante Änderung des Rotorwinkels des Rotors der elektrischen Maschine 6 misst, kann der Signalgenerator 2 ein weiteres elektrisches Testsignal mittels des Controller 5 an die elektrische Maschine 6 anlegen. Das weitere elektrische Testsignal kann eine der Richtung des ersten elektrischen Testsignals entgegengesetzte Richtung in dem d-q-Koordinatensystem aufweisen.

Weiter kann der Signalgenerator 2 dazu ausgebildet sein, die Stärke des elektrischen Testsignals, also etwa eine Spannung oder Stromstärke, sukzessive zu erhöhen. Somit wird jeweils ein elektrisches Testsignal an die elektrische Maschine 6 angelegt, um die Änderung des Rotorwinkels des Rotors der elektrischen Maschine 6 zu messen. Falls die Änderung des Rotorwinkels kleiner als ein vorgegebener Schwellenwert ist, wird die Stärke des elektrischen Testsignals erhöht.

Figur 2 zeigt ein schematisches Flussdiagramm eines Verfahrens zum Kalibrieren einer Ansteuerung einer elektrischen Maschine.

In einem ersten Verfahrensschritt S1 wird sichergestellt, dass sich die elektrische Maschine 6 im Stillstand befindet.

Weiter wird optional ein Offsetwinkel des Rotors der elektrischen Maschine 6 bestimmt. Das Bestimmen des Offsetwinkels kann durch Messung einer Anisotropie der elektrischen Maschine 6 erfolgen. Als Ergebnis kann die Richtung einer Flussachse mit einer gewissen Genauigkeit, etwa +/- 20° bestimmt werden. Somit ist die Lage der Achsen des d-q-Koordinatensystems bekannt. Die genaue Orientierung des d-q-Koordinatensystems muss jedoch noch nicht ermittelt worden sein.

In einem zweiten Verfahrensschritt S2 wird ein elektrisches Testsignal mit einer vorgegebenen Richtung in dem d-q-Koordinatensystem an die elektrische Maschine 6 angelegt. Beispielweise kann das elektrische Testsignal einer ersten Richtung entlang einer q-Achse entsprechen.

In einem dritten Verfahrensschritt S3 mit einer Änderung eines Rotorwinkels eines Rotors der elektrischen Maschine 6 gemessen, welche durch das angelegte elektrische Testsignal hervorgerufen wird.

In einem weiteren Verfahrensschritt S4 wird anhand der gemessenen Änderung des Rotorwinkels des Rotors der elektrischen Maschine 6 die Orientierung des d-q-Koordinatensystems bestimmt. Falls beispielweise eine Anregung in positiver Richtung entlang der q-Achse eine Änderung des Rotorwinkels in positiver Richtung nach sich zieht, so kann beim Messen einer Änderung des Rotorwinkels in positiver Richtung geschlossen werden, dass das Testsignal ebenfalls in positiver Richtung entlang der q-Achse ausgerichtet war.

Die Ansteuerung der elektrischen Maschine 6 durch den Controller 5 wird im Folgenden unter Berücksichtigung der ermittelten Orientierung des d-q-Koordinatensystems durchgeführt. Der Controller 5 ist somit kalibriert worden.

Weiter kann vorgesehen sein, eine Vielzahl von elektrischen Testsignalen an die elektrische Maschine 6 anzulegen, welche sich durch die vorgegebenen Richtungen in dem d-q-Koordinatensystem unterscheiden.

So kann zuerst ein erstes Testsignal mit einer ersten vorgegebenen Richtung in dem d-q-Koordinatensystem an die elektrische Maschine 6 angelegt werden. Falls die hervorgerufene Änderung des Rotorwinkels des Rotors der elektrischen Maschine 6 nicht messbar ist oder nur einen geringen Wert aufweist, welcher einen vorgegebenen Schwellenwert unterschreitet, kann ein zweites Testsignal mit einer von der ersten vorgegebenen Richtung abweichenden zweiten Richtung an die elektrische Maschine 6 angelegt werden. Vorzugweise kann die zweite Richtung der ersten Richtung entgegengesetzt sein. Weiter kann vorgesehen sein, weitere Testsignale mit weiteren Richtungen in dem d-q-Koordinatensystem anzulegen, um die Genauigkeit der Messungen zu verbessern.

Schließlich kann auch vorgesehen sein, eine maximale Spannung oder eine maximale Stromstärke des elektrischen Testsignals sukzessive zu erhöhen, bis eine Änderung des Rotorwinkels des Rotors der elektrischen Maschine gemessen werden kann, d.h die Reibung von Rotor und Getriebe überwunden wird.

## Patentansprüche

1. Verfahren zum Kalibrieren einer Ansteuerung einer elektrischen Maschine (6), mit den Schritten:
Anlegen (S2) mindestens eines elektrischen Testsignals mit einer vorgegebenen Richtung entlang der q-Achse in einem d-q-Koordinatensystem an die elektrische Maschine (6);
Messen (S3) einer Änderung eines Rotorwinkels eines Rotors der elektrischen Maschine (6) in Abhängigkeit von dem angelegten mindestens einen elektrischen Testsignal; und
Kalibrieren (S4) der Ansteuerung der elektrischen Maschine (6), wobei die Ansteuerung unter Verwendung des d-q-Koordinatensystems erfolgt, und wobei eine Orientierung des d-q-Koordinatensystems anhand der gemessenen Änderung des Rotorwinkels des Rotors der elektrischen Maschine (6) bestimmt wird,
**dadurch gekennzeichnet, dass**
anhand der gemessenen Änderung des Rotorwinkels die Drehrichtung des Rotors der elektrischen Maschine bestimmt wird;
mittels der Kalibrierung der Ansteuerung der elektrischen Maschine eine Hypothese bezüglich einer Orientierung des d-q-Koordinatensystems plausibilisiert wird;
das Anlegen des mindestens einen elektrischen Testsignals mit einer vorgegebenen Richtung entlang der q-Achse in einem d-q-Koordinatensystem an die elektrische Maschine (6) das Anlegen eines ersten Testsignals mit einer ersten vorgegebenen Richtung in dem d-q-Koordinatensystem an die elektrische Maschine (6) umfasst; und
falls das Anlegen des ersten Testsignals keine Änderung des Rotorwinkels des Rotors der elektrischen Maschine (6) hervorruft, ein zweites Testsignal mit einer von der ersten vorgegebenen Richtung in dem d-q-Koordinatensystem abweichenden zweiten Richtung an die elektrische Maschine (6) angelegt wird, wobei die zweite Richtung der ersten Richtung in dem d-q-Koordinatensystem entgegengesetzt ist.

2. Verfahren nach Anspruch 1, wobei vor dem Anlegen des elektrischen Testsignals ein Offsetwinkel des Rotors der elektrischen Maschine (6) bestimmt wird (S1).

3. Verfahren nach Anspruch 2, wobei das Bestimmen des Offsetwinkels des Rotors der elektrischen Maschine (6) anhand einer Messung einer Anisotropie der elektrischen Maschine (6) erfolgt.

4. Verfahren nach einem der vorangehenden Ansprüche, wobei eine Vielzahl von elektrischen Testsignalen an die elektrische Maschine (6) angelegt wird, wobei sich die vorgegebenen Richtungen der Testsignale in dem d-q-Koordinatensystem voneinander unterscheiden.

5. Verfahren nach einem der vorangehenden Ansprüche, wobei das elektrische Testsignal ein Spannungssignal oder ein Stromsignal ist.

6. Verfahren nach Anspruch 7, wobei eine maximale Spannung oder eine maximale Stromstärke des elektrischen Testsignals sukzessive erhöht wird, bis eine Änderung des Rotorwinkels des Rotors der elektrischen Maschine (6) messbar ist.

7. Verfahren nach einem der vorangehenden Ansprüche, wobei sich die elektrische Maschine (6) beim Anlegen des elektrischen Testsignals im Stillstand befindet.

8. Vorrichtung (1) zum Kalibrieren einer Ansteuerung einer elektrischen Maschine (6), mit:
einem Signalgenerator (2), welcher dazu ausgebildet ist, mindestens ein elektrisches Testsignal mit einer vorgegebenen Richtung entlang der q-Achse in einem d-q-Koordinatensystem an die elektrische Maschine (6) anzulegen;
einer Messeinrichtung (3), welche dazu ausgebildet ist, eine Änderung eines Rotorwinkels des Rotors der elektrischen Maschine (6) in Abhängigkeit von dem angelegten mindestens einen elektrischen Testsignal zu messen; und
einer Kalibriereinrichtung (4), welche dazu ausgebildet ist, die Ansteuerung der elektrischen Maschine (6) zu kalibrieren, wobei die Ansteuerung unter Verwendung des d-q-Koordinatensystems erfolgt, und wobei die Kalibriereinrichtung (4) dazu ausgebildet ist, eine Orientierung des d-q-Koordinatensystems anhand der gemessenen Änderung des Rotorwinkels des Rotors der elektrischen Maschine (6) zu bestimmen,
**dadurch gekennzeichnet, dass**
die Kalibriereinrichtung dazu ausgebildet ist, anhand der gemessenen Änderung des Rotorwinkels die Drehrichtung des Rotors der elektrischen Maschine zu bestimmen;
mittels der Kalibrierung der Ansteuerung der elektrischen Maschine eine Hypothese bezüglich einer Orientierung des d-q-Koordinatensystems zu plausibilisieren;
das Anlegen des mindestens einen elektrischen Testsignals mit einer vorgegebenen Richtung entlang der q-Achse in einem d-q-Koordinatensystem an die elektrische Maschine (6) das Anlegen eines ersten Testsignals mit einer ersten vorgegebenen Richtung in dem d-q-Koordinatensystem an die elektrische Maschine (6) umfasst; und
falls das Anlegen des ersten Testsignals keine Änderung des Rotorwinkels des Rotors der elektrischen Maschine (6) hervorruft, ein zweites Testsignal mit einer von der ersten vorgegebenen Richtung in dem d-q-Koordinatensystem abweichenden zweiten Richtung an die elektrische Maschine (6) angelegt wird,
wobei die zweite Richtung der ersten Richtung in dem d-q-Koordinatensystem entgegengesetzt ist.

## Claims

1. Method for calibrating the control of an electric machine (6), having the following steps:
applying (S2) at least one electrical test signal with a predefined direction along the q-axis in a d-q coordinate system to the electric machine (6);
measuring (S3) a change in a rotor angle of a rotor of the electric machine (6) depending on the applied at least one electrical test signal; and
calibrating (S4) the control of the electric machine (6), wherein the control takes place using the d-q coordinate system, and wherein an orientation of the d-q coordinate system is determined on the basis of the measured change in the rotor angle of the rotor of the electric machine (6),
**characterized in that**
the direction of rotation of the rotor of the electric machine is determined on the basis of the measured change in the rotor angle;
the plausibility of a hypothesis regarding the orientation of the d-q coordinate system is verified by means of the calibration of the control of the electric machine;
the application of the at least one electrical test signal with a predefined direction along the q-axis in a d-q coordinate system to the electric machine (6) includes the application of a first test signal with a first predefined direction in the d-q coordinate system to the electric machine (6); and,
if the application of the first test signal does not cause a change in the rotor angle of the electric machine rotor (6), a second test signal with a second direction that is different to the first predefined direction in the d-q coordinate system is applied to the electric machine (6), where the second direction is opposite to the first direction in the d-q coordinate system.

2. Method according to Claim 1, wherein an offset angle of the rotor of the electric machine (6) is determined (S1) before the electrical test signal is applied.

3. Method according to Claim 2, wherein the offset angle of the rotor of the electric machine (6) is determined on the basis of a measurement of an anisotropy of the electric machine (6).

4. Method according to any one of the preceding claims, wherein a plurality of electrical test signals are applied to the electric machine (6), wherein the predefined directions of the test signals in the d-q coordinate system differ from one another.

5. Method according to any one of the preceding claims, wherein the electrical test signal is a voltage signal or a current signal.

6. Method according to Claim 7, wherein a maximum voltage or a maximum current strength of the electrical test signal is increased successively until a change in the rotor angle of the rotor of the electric machine (6) can be measured.

7. Method according to any one of the preceding claims, wherein the electric machine (6) is at a standstill when the electrical test signal is applied.

8. Apparatus (1) for calibrating the control of an electric machine (6), having:
a signal generator (2) designed to apply at least one electrical test signal with a predefined direction along the q-axis in a d-q coordinate system to the electric machine (6);
a measuring device (3) designed to measure a change in a rotor angle of the rotor of the electric machine (6) on the basis of the applied at least one electrical test signal; and
a calibration device (4) designed to calibrate the control of the electric machine (6), wherein the control is carried out using the d-q coordinate system, and wherein the calibration device (4) is designed to determine an orientation of the d-q coordinate system on the basis of the measured change in the rotor angle of the electric machine rotor (6),
**characterized in that**
the calibration device is designed to determine the direction of rotation of the rotor of the electric machine on the basis of the measured change in the rotor angle;
to verify the plausibility of a hypothesis regarding the orientation of the d-q coordinate system by means of the calibration of the control of the electric machine;
the application of the at least one electrical test signal with a predefined direction along the q-axis in a d-q coordinate system to the electric machine (6) includes the application of a first test signal with a first predefined direction in the d-q coordinate system to the electric machine (6); and,
if the application of the first test signal does not cause a change in the rotor angle of the electric machine rotor (6), a second test signal with a second direction that is different to the first predefined direction in the d-q coordinate system is applied to the electric machine (6), where the second direction is opposite to the first direction in the d-q coordinate system.

## Revendications

1. Procédé d'étalonnage d'une commande d'une machine électrique (6), comprenant les étapes consistant à :
appliquer (S2) au moins un signal de test électrique ayant une direction prédéfinie le long de l'axe q dans un système de coordonnées d-q à la machine électrique (6) ;
mesurer (S3) une variation d'un angle de rotor d'un rotor de la machine électrique (6) en fonction dudit au moins un signal de test électrique appliqué ; et
étalonner (S4) la commande de la machine électrique (6), la commande étant effectuée en utilisant le système de coordonnées d-q, et une orientation du système de coordonnées d-q étant déterminée sur la base de la variation mesurée de l'angle de rotor du rotor de la machine électrique (6),
**caractérisé en ce que**
le sens de rotation du rotor de la machine électrique est déterminé sur la base de la variation mesurée de l'angle de rotor ;
une hypothèse concernant une orientation du système de coordonnées d-q est rendue plausible au moyen de l'étalonnage de la commande de la machine électrique ;
l'application dudit au moins un signal de test électrique ayant une direction prédéfinie le long de l'axe q dans un système de coordonnées d-q à la machine électrique (6) comprend l'application d'un premier signal de test ayant une première direction prédéfinie dans le système de coordonnées d-q à la machine électrique (6) ; et
dans le cas où l'application du premier signal de test ne provoque aucune variation de l'angle de rotor du rotor de la machine électrique (6), un second signal de test ayant une seconde direction différente de la première direction prédéfinie dans le système de coordonnées d-q est appliqué à la machine électrique (6), la seconde direction étant opposée à la première direction dans le système de coordonnées d-q.

2. Procédé selon la revendication 1, **caractérisé en ce qu'**un angle de décalage du rotor de la machine électrique (6) est déterminé (S1) avant l'application du signal de test électrique.

3. Procédé selon la revendication 2, **caractérisé en ce que** la détermination de l'angle de décalage du rotor de la machine électrique (6) est effectuée sur la base d'une mesure d'une anisotropie de la machine électrique (6).

4. Procédé selon l'une quelconque des revendications précédentes, **caractérisé en ce qu'**une pluralité de signaux de test électriques est appliquée à la machine électrique (6), les directions prédéfinies des signaux de test étant différentes les unes des autres dans le système de coordonnées d-q.

5. Procédé selon l'une quelconque des revendications précédentes, **caractérisé en ce que** le signal de test électrique est un signal de tension ou un signal de courant.

6. Procédé selon la revendication 7, **caractérisé en ce qu'**une tension maximale ou une intensité de courant maximale du signal de test électrique est augmentée successivement jusqu'à ce qu'une variation de l'angle de rotor du rotor de la machine électrique (6) soit mesurable.

7. Procédé selon l'une quelconque des revendications précédentes, **caractérisé en ce que** la machine électrique (6) est à l'arrêt lors de l'application du signal de test électrique.

8. Dispositif (1) d'étalonnage d'une commande d'une machine électrique (6), comprenant :
un générateur de signal (2), qui est conçu pour appliquer au moins un signal de test électrique ayant une direction prédéfinie le long de l'axe q dans un système de coordonnées d-q à la machine électrique (6) ;
un dispositif de mesure (3), qui est conçu pour mesurer une variation d'un angle de rotor du rotor de la machine électrique (6) en fonction dudit au moins un signal de test électrique appliqué ; et
un dispositif d'étalonnage (4), qui est conçu pour étalonner la commande de la machine électrique (6), la commande étant effectuée en utilisant le système de coordonnées d-q, et le dispositif d'étalonnage (4) étant conçu pour déterminer une orientation du système de coordonnées d-q sur la base de la variation mesurée de l'angle de rotor du rotor de la machine électrique (6),
**caractérisé en ce que**
le dispositif d'étalonnage est conçu pour déterminer le sens de rotation du rotor de la machine électrique sur la base de la variation mesurée de l'angle de rotor ;
pour rendre plausible une hypothèse concernant une orientation du système de coordonnées d-q au moyen de l'étalonnage de la commande de la machine électrique ;
l'application dudit au moins un signal de test électrique ayant une direction prédéfinie le long de l'axe q dans un système de coordonnées d-q à la machine électrique (6) comprend l'application d'un premier signal de test ayant une première direction prédéfinie dans le système de coordonnées d-q à la machine électrique (6) ; et
dans le cas où l'application du premier signal de test ne provoque aucune variation de l'angle de rotor du rotor de la machine électrique (6), un second signal de test ayant une seconde direction différente de la première direction prédéfinie dans le système de coordonnées d-q est appliqué à la machine électrique (6), la seconde direction étant opposée à la première direction dans le système de coordonnées d-q.
